# EUROPÄISCHE PATENTSCHRIFT

(11) **EP 3 317 511 B1**
(45) Veröffentlichungstag und Bekanntmachung des Hinweises auf die Patenterteilung: **12.02.2020**
(21) Anmeldenummer: 16722859.2
(22) Anmeldetag: 09.05.2016
(51) Int. Cl.: F02M 59/36, F02M 63/00, F16K 1/52

(54) **ELEKTROMAGNETISCH BETÄTIGBARES SAUGVENTIL FÜR EINE HOCHDRUCKPUMPE SOWIE HOCHDRUCKPUMPE**
ELECTROMAGNETICALLY ACTUABLE INTAKE VALVE FOR A HIGH-PRESSURE PUMP, AND HIGH-PRESSURE PUMP
SOUPAPE D'ASPIRATION À ACTIONNEMENT ÉLECTROMAGNÉTIQUE POUR UNE POMPE HAUTE PRESSION ET POMPE HAUTE PRESSION

(30) Priorität: 02.07.2015 DE 102015212376
(43) Veröffentlichungstag der Anmeldung: 09.05.2018
(73) Patentinhaber: Robert Bosch GmbH, 70442 Stuttgart (DE)
(72) Erfinder: KOLB, Stefan, 71116 Gaertringen (DE); HEBER, Hans, 70193 Stuttgart (DE)
(86) Internationale Anmeldenummer: PCT/EP2016/060331
(87) Internationale Veröffentlichungsnummer: WO 2017/001095

(56) Entgegenhaltungen:
- EP-A1- 2 687 713
- WO-A1-2014/057060
- DE-A1- 2 645 594
- DE-A1-102013 220 593

## Beschreibung

Die Erfindung betrifft ein elektromagnetisch betätigbares Saugventil für eine Hochdruckpumpe eines Kraftstoffeinspritzsystems, insbesondere eines Common-Rail-Einspritzsystems, mit den Merkmalen des Oberbegriffs des Anspruchs 1. Ferner betrifft die Erfindung eine Hochdruckpumpe für ein Kraftstoffeinspritzsystem, insbesondere ein Common-Rail-Einspritzsystem, mit einem solchen Saugventil.

### Stand der Technik

Aus der EP 2 687 713 A1 ist ein elektromagnetisch ansteuerbares Saugventil für eine Hochdruckpumpe eines Kraftstoffeinspritzsystems bekannt, das ein in einem Gehäuseteil der Hochdruckpumpe hubbeweglich aufgenommenes Ventilschließelement aufweist. In Schließrichtung ist das Ventilschließelement von der Federkraft einer Feder beaufschlagt, die als Schraubendruckfeder ausgebildet ist und einerseits am Ventilkörper, andererseits mittelbar über einen Federteller am Ventilschließelement abgestützt ist. Um das Ventilschließelement entgegen der Federkraft der Feder in eine Offenstellung zu bewegen, ist ferner eine Magnetbaugruppe mit einer Magnetspule vorgesehen. Die Magnetspule wirkt mit einem hubbeweglichen Anker zusammen, der in Richtung des Ventilschließelements von der Federkraft einer weiteren Feder beaufschlagt ist, deren Federkraft größer als die der ersten Feder ist, so dass bei unbestromter Magnetspule der Anker über den Federteller mit dem Ventilschließelement gekoppelt ist und dieses in einer Offenstellung hält. Zum Schließen wird die Magnetspule bestromt, so dass sich der Anker in Richtung der Magnetspule, d. h. vom Ventilschließelement weg, bewegt. Die dabei bewirkte Entlastung des Ventilschließelements führt dazu, dass die Federkraft der das Ventilschließelement in Schließrichtung beaufschlagenden Feder das Ventilschließelement in die Schließstellung überführt. Um das Saugventil erneut zu öffnen, wird die Bestromung der Magnetspule beendet. Die Federkraft der den Anker beaufschlagenden Feder stellt daraufhin den Anker in seine Ausgangslage zurück, wobei der Anker über den Federteller am Ventilschließelement anschlägt und dieses mitführt, bis der mit dem Ventilschließelement verbundene Federteller zur Anlage am Ventilkörper gelangt und den Öffnungshub des Ventilschließelements begrenzt. Der Kraftfluss beim Öffnen verläuft demnach über den Anker und den Federteller in den Ventilkörper. Dabei wird eine radiale Fügestelle zwischen dem Federteller und dem Ventilschließelement hohen Belastungen ausgesetzt, die dazu führen können, dass sich der Federteller und das Ventilschließelement relativ zueinander bewegen. Dies gilt es zu vermeiden. Das Ventilschließelement ragt durch den Federteller hindurch und um einen Kontakt des Ventilschließelements mit dem Anker zu vermeiden weist der Anker eine Öffnung auf, durch die das Ventilschließelement hindurchragt, wobei die Anlage des Ankers am Federteller an dessen die Öffnung umgebenden Randbereich erfolgt. Der Anker ist dadurch aufwendig herzustellen.

Aufgabe der vorliegenden Erfindung ist es daher, die Robustheit eines elektromagnetisch betätigbaren Saugventils für eine Hochdruckpumpe eines Kraftstoffeinspritzsystems, insbesondere eines Common-Rail-Einspritzsystems, zu steigern, um Relativbewegungen des Federtellers und des Ventilschließelements zu verhindern sowie eine kostengünstige Herstellung zu ermöglichen.

Zur Lösung der Aufgabe wird das elektromagnetisch betätigbare Saugventil mit den Merkmalen des Anspruchs 1 angegeben. Vorteilhafte Weiterbildungen der Erfindung sind den Unteransprüchen zu entnehmen. Ferner wird eine Hochdruckpumpe mit einem solchen Saugventil vorgeschlagen.

### Offenbarung der Erfindung

### Vorteile der Erfindung

Das für eine Hochdruckpumpe eines Kraftstoffeinspritzsystems, insbesondere eines Common-Rail-Einspritzsystems, vorgeschlagene elektromagnetisch betätigbare Saugventil umfasst ein mit einem Ventilsitz zusammenwirkendes, hubbewegliches Ventilschließelement, das in Schließrichtung von der Federkraft einer Ventilfeder beaufschlagt ist, die an einem mit dem Ventilschließelement verbundenen Federteller abgestützt ist. Ferner umfasst das Saugventil einen mit einem Elektromagneten zusammenwirkenden, hubbeweglichen Anker, der in Richtung des Ventilschließelements von der Federkraft einer Ankerfeder beaufschlagt ist, die größer als die der Ventilfeder ist. Der Federteller weist eine erste Anschlagfläche zur Begrenzung des Öffnungshubs des Ventilschließelements und eine zweite Anschlagfläche zur mechanischen Kopplung mit dem Anker auf. Zur Ausbildung der zweiten Anschlagfläche besitzt der Federteller einen das Ventilschließelement in axialer Richtung überragenden Abschnitt. Dadurch ist sichergestellt, dass der Anker bei seiner Rückstellung nicht in Kontakt mit dem Ventilschließglied gelangt. Der das Ventilschließelement überragende Abschnitt des Federtellers kann hierzu hülsenförmig oder kappenartig ausgeführt sein und das dem Anker zugewandte Ende des Ventilschließelements umgeben oder - bei einer kappenartigen Ausführung - vollständig umschließen.

Bei dem eingangs beschriebenen bekannten Saugventil ist der Federteller als eine Hülse ausgeführt, die einen Endabschnitt des Ventilschließelements umgibt, wobei jedoch das Ventilschließelement den Federteller überragt, um die erforderliche mechanische Kopplung mit dem Anker bzw. dem Ankerstift zu ermöglichen. Der Federteller des erfindungsgemäßen Saugventils weist demgegenüber eine deutlich größere Abmessung in axialer Richtung auf. Die Bezeichnung "Federteller" wird dennoch beibehalten, um auf die ursprüngliche und noch immer vorhandene Funktion dieses Bauteils zu verweisen, die darin besteht, die Ventilfeder abzustützen. Hierzu ist bevorzugt am Federteller ein sich nach radial außen erstreckender Bundabschnitt vorgesehen.

Vorteilhafterweise ist der Federteller zumindest abschnittsweise hülsenförmig ausgebildet und auf das dem Ventilsitz abgewandte Ende des Ventilschließelements aufgesetzt. Die Hülsenform erleichtert die Herstellung einer dauerhaften Verbindung von Federteller und Ventilschließelement, die vorzugsweise eine Pressverbindung ist. Eine solche ist einfach und kostengünstig herzustellen und gewährleistet im Hinblick auf die geringeren Anforderungen an die Robustheit der Fügestelle eine ausreichend belastbare Verbindung.

Des Weiteren bevorzugt ist die erste Anschlagfläche eine ringförmige Stirnfläche des Federtellers. Bei der Stirnfläche handelt es sich um die dem Anker abgewandte Stirnfläche des Federtellers. Die Ringform der ersten Anschlagfläche führt zu einer gleichmäßigen Kraftverteilung, wenn der Federteller selbst an einem Ventilkörper oder an einem Gehäuseteil der Hochdruckpumpe anschlägt, um den Öffnungshub des Ventilschließelements zu begrenzen.

Gemäß einer ersten bevorzugten Ausführungsform der Erfindung wirkt die erste Anschlagfläche des Federtellers mit einer den Ventilsitz ausbildenden Ventilplatte des Saugventils hubbegrenzend zusammen. Die Ventilplatte ist vorzugsweise in ein Gehäuseteil der Hochdruckpumpe eingesetzt und weiterhin vorzugsweise über eine Ventilschraube gegenüber dem Gehäuseteil axial vorgespannt. Die Anschlagkraft des Ankers wird in diesem Fall über den Federteller erst in die Ventilplatte und dann in das Gehäuseteil der Hochdruckpumpe eingeleitet.

Gemäß einer alternativen Ausführungsform der Erfindung wirkt die erste Anschlagfläche des Federtellers mit einem den Ventilsitz ausbildenden Gehäuseteil der Hochdruckpumpe hubbegrenzend zusammen. Das heißt, dass das Saugventil ohne eigene Ventilplatte in das Gehäuseteil der Hochdruckpumpe integriert ist. Die Übertragung der Anschlagkraft des Ankers erfolgt in diesem Fall über den Federteller direkt in das Gehäuseteil der Hochdruckpumpe. Der Wegfall der Ventilplatte reduziert die Anzahl der Bauteile und senkt auf diese Weise die Herstellungskosten.

Des Weiteren wird vorgeschlagen, dass der Anker als Tauchanker ausgebildet und zumindest bereichsweise von einer ringförmigen Magnetspule des Elektromagneten umgeben ist. Auf diese Weise sind große Ankerhübe erzielbar.

Vorteilhafterweise ist im Anker eine zentrale Ausnehmung zur Aufnahme und Abstützung der Ankerfeder ausgebildet. Die Ankerfeder ist innerhalb der Ausnehmung geführt und lagefixiert. Ferner ist gewährleistet, dass der Anker mittig von der Federkraft der Ankerfeder beaufschlagt wird.

Um bei einer Hubbewegung des Ankers einen Druckausgleich im Ankerbewegungsraum zu ermöglichen, ist vorzugsweise im Anker mindestens eine Durchströmöffnung ausgebildet, die sich von der einen zur anderen Stirnfläche des Ankers erstreckt. Bei einer Hubbewegung des Ankers vermag Kraftstoff aus einem oberhalb des Ankers liegenden Bereich des Ankerbewegungsraums durch die Durchströmöffnung im Anker in einen unterhalb des Ankers liegenden Bereich zu strömen, so dass ein Druckausgleich bewirkt wird. Vorzugsweise sind mehrere dezentral angeordnete Durchströmöffnungen vorgesehen, die im gleichen Winkelabstand zueinander angeordnet sind, so dass der Anker gleichmäßig durchströmt wird.

Darüber hinaus wird eine Hochdruckpumpe für ein Kraftstoffeinspritzsystem, insbesondere für ein Common-Rail-Einspritzsystem, mit einem erfindungsgemäßen Saugventil vorgeschlagen. Das Saugventil ist dabei bevorzugt in ein den Ventilsitz ausbildendes Gehäuseteil der Hochdruckpumpe integriert. Die Ausbildung des Ventilsitzes durch das Gehäuseteil der Hochdruckpumpe führt zum Wegfall einer separaten Ventilplatte. Die Anzahl der Bauteile wird demnach reduziert, was zu einer weiteren Kostenoptimierung führt.

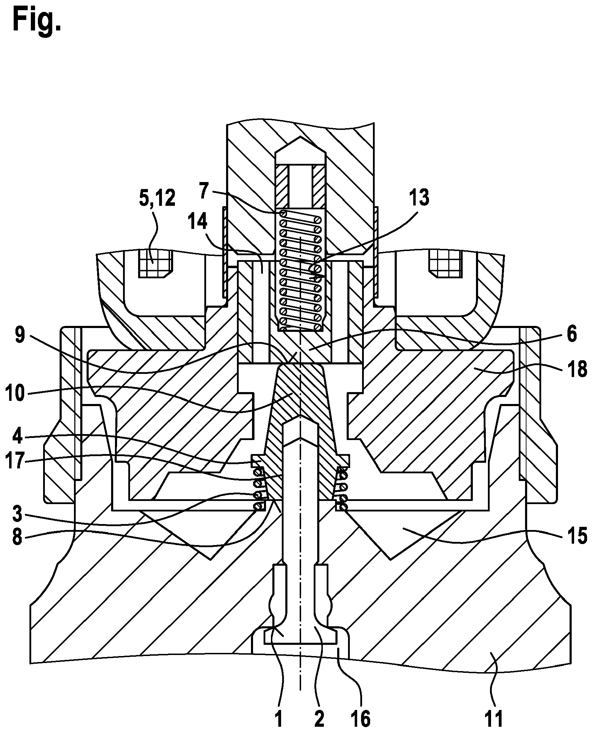

Eine bevorzugte Ausführungsform der Erfindung wird nachfolgend anhand der beigefügten Zeichnung näher erläutert. Diese zeigt einen schematischen Längsschnitt durch ein erfindungsgemäßes elektromagnetisch betätigbares Saugventil, das in eine Hochdruckpumpe für ein Kraftstoffeinspritzsystem integriert ist.

### Ausführliche Beschreibung der Zeichnung

Das in der Figur schematisch dargestellte Saugventil ist in ein Gehäuseteil 11 einer Kraftstoffhochdruckpumpe integriert. Das Gehäuseteil 11 bildet einen Ventilsitz 1 des Saugventils aus. Zugleich wird über das Gehäuseteil 11 eine Führung eines hubbeweglichen Ventilschließelements 2 des Saugventils bewirkt, das mit dem Ventilsitz 1 dichtend zusammenwirkt. In Schließrichtung ist das Ventilschließelement 2 von der Federkraft einer Ventilfeder 3 beaufschlagt, die das dem Ventilsitz 1 abgewandte Ende des Ventilschließelements 2 umgibt. Die Ventilfeder 3 ist einerseits am Gehäuseteil 11, andererseits an einem Federteller 4 abgestützt, der auf das Ende des Ventilschließelements 2 aufgepresst ist und dieses vollständig umschließt.

In der Figur ist das Saugventil in der Offenstellung dargestellt. Der Öffnungshub des Ventilschließelements 2 wird dabei durch den Federteller 4 begrenzt, der hierzu eine Anschlagfläche 8 besitzt, die durch die dem Gehäuseteil 11 zugewandte ringförmige Stirnfläche des Federtellers 4 gebildet wird. In Offenstellung des Saugventils liegt die Anschlagfläche 8 am Gehäuseteil 11 der Hochdruckpumpe an. Die Federkraft der in Schließrichtung wirkenden Ventilfeder 3 wird dabei durch die Federkraft einer Ankerfeder 7 überwunden, die einen Anker 6 in Richtung des Federtellers 4 beaufschlagt. Die Federkraft der Ankerfeder 7, die in einer zentralen Ausnehmung 13 des Ankers 6 aufgenommen ist, ist hierzu größer als die der Ventilfeder 3 gewählt. Der Anker 6 liegt dabei an einem das Ventilschließelement 2 überragenden Abschnitt 10 des Federtellers 4 an.

Zum Schließen des Saugventils ist ein Elektromagnet 5 vorgesehen, der eine ringförmige Magnetspule 12 umfasst. Wird die Magnetspule 12 bestromt, baut sich ein Magnetfeld auf, dessen Magnetkraft den Anker 6 entgegen der Federkraft der Ankerfeder 7 nach oben bewegt. Dabei löst sich der Anker 4 vom Federteller 4, so dass die Federkraft der Ventilfeder 3 das Ventilschließelement 2 in den Ventilsitz 1 zieht. Dabei hebt der Federteller 4 vom Gehäuseteil 11 ab. Im Anker 6 vorgesehene, dezentral angeordnete Durchströmöffnungen 14 bewirken einen Druckausgleich.

Zum Öffnen des Saugventils wird die Bestromung der Magnetspule 12 beendet. Die Federkraft der Ankerfeder 7 stellt daraufhin den Anker 6 in seine Ausgangslage zurück. Dabei schlägt der Anker 6 an einer Anschlagfläche 9 des Federtellers 4 an, die durch eine dem Anker 6 zugewandte Stirnfläche des Abschnitts 10 des Federtellers 4 gebildet wird. Die Anschlagkraft des Ankers 6 wird über den Federteller 4 in das Gehäuseteil 11 abgeführt, sobald dieser zur Anlage am Gehäuseteil 11 gelangt. Da der Federteller 4 auf das Ende des Ventilschließelements 2 aufgepresst ist, wird das Ventilschließelement 2 über die Bewegung des Federtellers 4 aus dem Ventilsitz 1 gehoben und das Saugventil öffnet. Kraftstoff vermag nun über einen Niederdruckraum 15, der durch das Gehäuseteil 11 und einen Ventilkörper 18 begrenzt wird, über den Ventilsitz 1 in einen Hochdruck-Elementraum 16 der Hochdruckpumpe zu strömen.

Die zum Öffnen des Saugventils erforderliche mechanische Kopplung des Ankers 6 mit dem Ventilschließelement 2 wird bei dem dargestellten erfindungsgemäßen Saugventil indirekt über den Federteller 4 bewirkt. Dieser weist hierzu den das Ventilschließelement 2 überragenden Abschnitt 10 mit der Anschlagfläche 9 auf. Kern der Erfindung ist demnach ein modifizierter Federteller 4. Der modifizierte Federteller 4 bewirkt, dass eine radiale Fügestelle 17 im Bereich des Presssitzes des Federtellers 4 auf dem Ventilschließelement 2 entlastet wird und die Robustheit des Saugventils steigt.

Die Erfindung ist nicht auf die in der Figur dargestellte Ausführungsform eines integrierten Saugventils beschränkt, sondern schließt auch Saugventile mit ein, die über eine Ventilplatte zur Ausbildung des Ventilsitzes 1 verfügen.

## Patentansprüche

1. Elektromagnetisch betätigbares Saugventil für eine Hochdruckpumpe eines Kraftstoffeinspritzsystems, insbesondere eines Common-Rail-Einspritzsystems, umfassend ein mit einem Ventilsitz (1) zusammenwirkendes, hubbewegliches Ventilschließelement (2), das in Schließrichtung von der Federkraft einer Ventilfeder (3) beaufschlagt ist, die an einem mit dem Ventilschließelement (2) verbundenen Federteller (4) abgestützt ist, ferner umfassend einen mit einem Elektromagneten (5) zusammenwirkenden, hubbeweglichen Anker (6), der in Richtung des Ventilschließelements (2) von der Federkraft einer Ankerfeder (7) beaufschlagt ist, die größer als die der Ventilfeder (3) ist, wobei der Federteller (4) eine erste Anschlagfläche (8) zur Begrenzung des Öffnungshubs des Ventilschließelements (2) und eine zweite Anschlagfläche (9) zur mechanischen Kopplung mit dem Anker (6) aufweist,
**dadurch gekennzeichnet, dass** der Federteller (4) zur Ausbildung der zweiten Anschlagfläche (9) einen das Ventilschließelement (2) in axialer Richtung überragenden Abschnitt (10) besitzt.

2. Saugventil nach Anspruch 1,
**dadurch gekennzeichnet, dass** der Federteller (4) zumindest abschnittsweise hülsenförmig ausgebildet ist und auf das dem Ventilsitz (1) abgewandte Ende des Ventilschließelements (2) aufgesetzt, vorzugsweise aufgepresst, ist.

3. Saugventil nach einem der vorhergehenden Ansprüche,
**dadurch gekennzeichnet, dass** die erste Anschlagfläche (8) eine ringförmige Stirnfläche des Federtellers (4) ist.

4. Saugventil nach einem der vorhergehenden Ansprüche,
**dadurch gekennzeichnet, dass** die erste Anschlagfläche (8) mit einer den Ventilsitz (1) ausbildenden Ventilplatte oder mit einem den Ventilsitz (1) ausbildenden Gehäuseteil (11) der Hochdruckpumpe hubbegrenzend zusammenwirkt.

5. Saugventil nach einem der vorhergehenden Ansprüche,
**dadurch gekennzeichnet, dass** der Anker (6) als Tauchanker ausgebildet ist und zumindest bereichsweise von einer ringförmigen Magnetspule (12) des Elektromagneten (5) umgeben ist.

6. Saugventil nach einem der vorhergehenden Ansprüche,
**dadurch gekennzeichnet, dass** im Anker (6) eine zentrale Ausnehmung (13) zur Aufnahme und Abstützung der Ankerfeder (7) ausgebildet ist.

7. Saugventil nach einem der vorhergehenden Ansprüche,
**dadurch gekennzeichnet, dass** im Anker (6) mindestens eine Durchströmöffnung (14) ausgebildet ist, die vorzugsweise dezentral angeordnet ist.

8. Hochdruckpumpe für ein Kraftstoffeinspritzsystem, insbesondere ein Common-Rail-Einspritzsystem, mit einem Saugventil nach einem der vorhergehenden Ansprüche, das in ein den Ventilsitz (1) ausbildendes Gehäuseteil (11) der Hochdruckpumpe integriert ist.

## Claims

1. Electromagnetically actuable intake valve for a high-pressure pump of a fuel injection system, in particular of a common-rail injection system, comprising a reciprocating valve closure element (2) which interacts with a valve seat (1) and which is loaded in the closing direction by the spring force of a valve spring (3) which is supported on a spring plate (4) connected to the valve closure element (2), further comprising a reciprocating armature (6) which interacts with an electromagnet (5) and which is loaded in the direction of the valve closure element (2) by the spring force of an armature spring (7), which spring force is larger than that of the valve spring (3), wherein the spring plate (4) has a first abutment surface (8) for limiting the opening stroke of the valve closure element (2) and has a second abutment surface (9) for mechanically coupling to the armature (6),
**characterized in that,** for the formation of the second abutment surface (9), the spring plate (4) has a section (10) which projects beyond the valve closure element (2) in the axial direction.

2. Intake valve according to Claim 1,
**characterized in that** the spring plate (4) is of sleeve-like form at least in sections and is placed on, preferably pressed on, that end of the valve closure element (2) which faces away from the valve seat (1).

3. Intake valve according to one either of the preceding claims,
**characterized in that** the first abutment surface (8) is an annular end face of the spring plate (4).

4. Intake valve according to one of the preceding claims,
**characterized in that** the first abutment surface (8) interacts in a stroke-limiting manner with a valve plate forming the valve seat (1) or with a housing part (11), forming the valve seat (1), of the high-pressure pump.

5. Intake valve according to one of the preceding claims,
**characterized in that** the armature (6) is in the form of a solenoid plunger and is surrounded, at least regionally, by an annular magnet coil (12) of the electromagnet (5).

6. Intake valve according to one of the preceding claims,
**characterized in that** a central recess (13) for accommodating and supporting the armature spring (7) is formed in the armature (6).

7. Intake valve according to one of the preceding claims,
**characterized in that** at least one throughflow opening (14), which is preferably arranged decentrally, is formed in the armature (6).

8. High-pressure pump for a fuel injection system, in particular for a common-rail injection system, having an intake valve according to one of the preceding claims which is integrated into a housing part (11), forming the valve seat (1), of the high-pressure pump.

## Revendications

1. Soupape d'aspiration à actionnement électromagnétique pour une pompe haute pression d'un système d'injection de carburant, en particulier d'un système d'injection à rampe commune, comportant élément de fermeture de soupape (2) effectuant un mouvement de va-et-vient et coopérant avec un siège de soupape (1), lequel élément de fermeture de soupape est sollicité dans la direction de fermeture par la force d'un ressort de soupape (3) qui s'appuie contre une coupelle de ressort (4) reliée à l'élément de fermeture de soupape (2), comportant en outre une armature (6) à mouvement de va-et-vient coopérant avec un électro-aimant (5), laquelle armature est sollicitée dans la direction de l'élément de fermeture de soupape (2) par la force d'un ressort d'armature (7) qui est plus grande que celle du ressort de soupape (3), la coupelle de ressort (4) comprenant une première surface de butée (8) pour la limitation de la course d'ouverture de l'élément de fermeture de soupape (2) et une deuxième surface de butée (9) pour l'accouplement mécanique à l'armature (6),
**caractérisée en ce que** la coupelle de ressort (4) comporte, pour former la deuxième surface de butée (9), une partie (10) dépassant au-delà de l'élément de fermeture de soupape (2) dans la direction axiale.

2. Soupape d'aspiration selon la revendication 1,
**caractérisée en ce que** la coupelle de ressort (4) est réalisée en forme de douille au moins dans certaines parties et est placée, de préférence pressée, sur l'extrémité de l'élément de fermeture de soupape (2) opposée au siège de soupape (1).

3. Soupape d'aspiration selon l'une des revendications précédentes,
**caractérisée en ce que** la première surface de butée (8) est une surface frontale annulaire de la coupelle de ressort (4).

4. Soupape d'aspiration selon l'une des revendications précédentes,
**caractérisée en ce que** la première surface de butée (8) coopère, de manière à limiter la course, avec une plaque de soupape formant le siège de soupape (1) ou avec une partie de carter (11) de la pompe haute pression formant le siège de soupape (1).

5. Soupape d'aspiration selon l'une des revendications précédentes,
**caractérisée en ce que** l'armature (6) est réalisée sous forme de noyau plongeur et est entourée au moins par endroits par une bobine magnétique annulaire (12) de l'électro-aimant (5).

6. Soupape d'aspiration selon l'une des revendications précédentes,
**caractérisée en ce qu'**un évidement central (13) servant à recevoir et supporter le ressort d'armature (7) est formé dans l'armature (6).

7. Soupape d'aspiration selon l'une des revendications précédentes,
**caractérisée en ce qu'**au moins une ouverture d'écoulement (14) est formée dans l'armature (6), laquelle ouverture est disposée de préférence de manière décentrée.

8. Pompe haute pression d'un système d'injection de carburant, en particulier d'un système d'injection à rampe commune, comportant une soupape d'aspiration selon l'une des revendications précédentes, laquelle est intégrée dans une partie de carter (11) de la pompe haute pression formant le siège de soupape (1).
